# EUROPÄISCHE PATENTSCHRIFT

(11) **EP 0 998 986 B1**
(45) Veröffentlichungstag und Bekanntmachung des Hinweises auf die Patenterteilung: **15.09.2004**
(21) Anmeldenummer: 99121707.6
(22) Anmeldetag: 02.11.1999
(51) Int. Cl.: B08B 15/00

(54) **Vorrichtung zum Erfassen und Absaugen von Fluiden**
Device for capturing and aspirating fluids
Dispositif pour capter et aspirer des fluides

(30) Priorität: 06.11.1998 DE 29819896 U
(43) Veröffentlichungstag der Anmeldung: 10.05.2000
(73) Patentinhaber: Imtech Deutschland GmbH & Co. KG, 22047 Hamburg (DE)
(72) Erfinder: Detzer, Prof.Dr., 22047 Hamburg (DE)
(74) Vertreter: Richter, Werdermann, Gerbaulet & Hofmann

(56) Entgegenhaltungen:
- EP-A- 0 605 821
- DE-A- 3 901 859
- US-A- 4 584 929

## Beschreibung

Die Erfindung betrifft eine Vorrichtung zum Erfassen und Absaugen von Fluiden, insbesondere Luft und/oder anderen Gasen, mit einem eine stabilisierte Drallströmung wenigstens teilweise umschließenden und diese Drallströmung führenden teilzylindrischen Mantel, welcher eine sich in axialer Richtung bezüglich des Mantels erstreckende Zuströmöffnung aufweist, und mit mehreren Absaugöffnungen, welche mit einem Absaugsystem verbunden sind, wobei jede Absaugöffnung über einen Saugkanal mit dem Absaugsystem verbunden ist.

Aus der DE 42 43 834 A1 ist eine gattungsgemäße Abgaserfassungshaube bekannt, welche Senkenrohre aufweist, die radial zur Mantelfläche in die Haube hinein ragen und an ihren Enden koaxial zur Mantelfläche angeordnete Senkenöffnungen aufweisen. Die Senkenöffnungen übernehmen im Zentrum der Abgaserfassungshaube Abluft und regen so eine Drallströmung an. Diese Druckschrift entspricht inhaltlich der EP 0 605 821 A1.

Aus der DE 39 01 859 C2 ist eine Vorrichtung zum Erzeugen einer Absaugströmung bekannt, wobei koaxial zu einer Mantelfläche abgesaugt wird und radial bezüglich der Mantelfläche in Schwerkraftrichtung ein Staubbunker vorgesehen ist. Von dem Staubbunker kann abgeschiedener Staub über eine übliche Schleuse abgezogen werden.

Die WO 88/09227 beschreibt eine Saughutze, welche um mehrere Achsen schwenkbar ist. Diese Saughutze arbeitet mit einer von einem Blasstrahl angetriebenen Wirbelströmung in einem Mantelelement. Ferner ist in dem Mantelelement ein Fenster vorgesehen, jedoch wird in dieses Fenster ein Sammelelement eingesetzt, welches innerhalb des Mantelelementes beidseitig in axialer Richtung absaugt, und die abströmende Luft rechtwinklig zum Mantelelement bzw. der darin erzeugten Wirbelströmung ablenkt.

Es ist Aufgabe der vorliegenden Erfindung, eine Vorrichtung der o.g. Art zur Verfügung zu stellen, welche die vorgenannten Nachteile beseitigt und mit einem einfachen Aufbau eine verbesserte Absaugung erzielt.

Diese Aufgabe wird durch eine Vorrichtung der o.g. Art mit den in Anspruch 1 gekennzeichneten Merkmalen gelöst.

Dazu ist es erfindungsgemäß vorgesehen, dass die Absaugöffnungen tangential zur Drallströmung angeordnet sind, wozu alle Absaugöffnungen im teilzylindrischen Teil des Mantels angeordnet sind.

Dies hat den Vorteil, dass eine tangentiale Absaugung zur Verfügung steht, wobei bevorzugt und schnell schwerere Schwebeteilchen in dem abgesaugten Fluid abgesaugt werden, da diese aufgrund von Zentrifugalkräften in der Drallströmung nach außen auf die Mantelfläche hin strömen.

Von ganz wesentlicher Bedeutung ist dabei, dass es sich überraschenderweise gezeigt hat, dass die Mantelfläche nicht als stetig gekrümmte Fläche ausgebildet sein muss, sondern auch als ein im Querschnitt einoder mehreckiger Körper ausgebildet sein kann. Daher kann die Mantelfläche auch durch eine Wand- und/oder Deckenfläche eines Gebäudes, insbesondere in Verbindung mit einem stufigen Abschnitt, z.B. einer Blende, einem Sturz, einem Rahmen o. dgl. ausgebildet sein, ohne dass die erfindungsgemäße Gestaltung verlassen bzw. die erfindungsgemäße Wirkung beeinträchtigt wird.

Vorzugsweise Weitergestaltungen der Vorrichtung sind in den Ansprüchen 2 bis 11 beschrieben.

So ergibt sich eine besonders einfache und wirkungsvolle Anordnung, wenn die wenigstens eine Absaugöffnung im Mantel ausgebildet ist und der bzw. die Saugkanäle derart ausgebildet sind, dass deren Längsachse im Bereich der Absaugöffnung tangential und/oder radial bezüglich der Drallströmung bzw. des Mantels ausgerichtet ist. Hierbei sind die Saugkanäle im Querschnitt rund oder vieleckig, insbesondere Rechteckig, ausgebildet.

Eine stabilisierende, axiale Führung der Drallströmung innerhalb des Mantels erzielt man dadurch, dass benachbart zu jeder Absaugöffnung wenigstens ein Trennelement parallel zur Drallströmung derart angeordnet ist, dass eine axiale Teilung des Volumens innerhalb des Mantels über eine vorbestimmte Querschnittsfläche ausgebildet ist, welche kleiner als die gesamte Querschnittsfläche des Mantels ist. Zweckmäßigerweise ist dabei die vorbestimmte Querschnittsfläche kleiner als die halbe Querschnittsfläche des Mantels und die Trennelemente sind in besonders vorteilhafter Weise derart angeordnet, dass eine freie Seite derselben eine Verlängerung einer Wandung der Zuströmöffnung in das Volumen innerhalb des Mantels hinein bildet.

In einer bevorzugten Ausführungsform ist ein einziger Saugkanal über die gesamte axiale Länge des Mantels und alle Absaugöffnungen überdekkend ausgebildet, wobei sich der Saugkanal bevorzugt im Querschnitt von den Absaugöffnungen weg trichterförmig erweitert.

Der Mantel ist beispielsweise halbschalenförmig ausgebildet, was ggf. notwendige Wartungs- und Reinigungsarbeiten an den Absaugöffnungen sowie den Aufbau der Vorrichtung an sich weiter vereinfacht.

Zweckmäßigerweise ist der Mantel an seinen axialen Enden mit Seitenwandungen abgeschlossen.

Nachstehend wird die Erfindung anhand der beigefügten Zeichnungen näher erläutert. Diese zeigen in
- Fig. 1: eine erste bevorzugte Ausführungsform einer erfindungsgemäßen Vorrichtung in perspektivischer Ansicht,
- Fig. 2: in einem Querschnitt,
- Fig. 3: in einem Längsschnitt,
- Fig. 4: eine zweite bevorzugte Ausführungsform einer erfindungsgemäßen Vorrichtung in perspektivischer Ansicht,
- Fig. 5: in einem Querschnitt,
- Fig. 6: in einem Längsschnitt,
- Fig. 7: eine dritte bevorzugte Ausführungsform einer efindungsgemäßen Vorrichtung in perspektivischer Ansicht,
- Fig. 8: in einem Querschnitt,
- Fig. 9: in einem Längsschnitt,
- Fig. 10: eine vierten bevorzugte Ausführungsform einer erfindungsgemäßen Vorrichtung in perspektivischer Ansicht,
- Fig. 11: in einem Querschnitt,
- Fig. 12: in einem Längsschnitt und
- Fig. 13: in einer Schnittansicht entlang Linie A-A von Fig. 11.

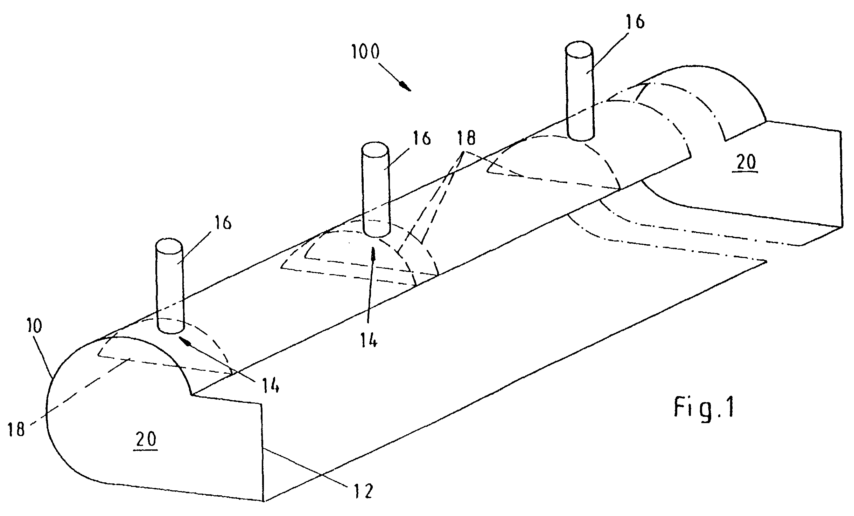

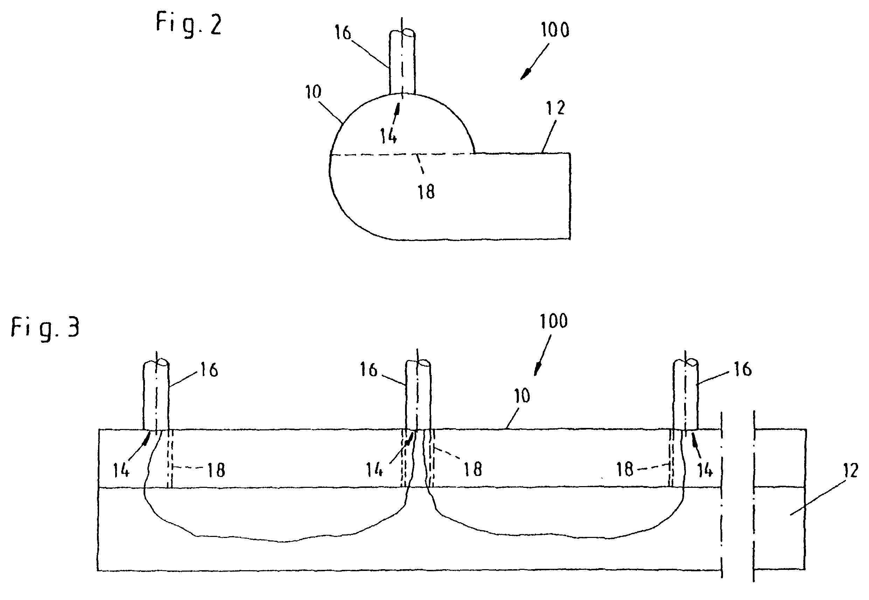

Die in Figuren 1 bis 3 dargestellte erste bevorzugte Ausführungsform einer erfindungsgemäßen Vorrichtung 100 zum Erfassen und Absaugen von Fluiden umfasst einen im wesentlichen teilzylindrischen Mantel 10, mit einem Zuströmkanal 12 und Absaugöffnungen 14. Die Absaugöffnungen 14 sind im Mantel 10 ausgebildet. Jedem Absaugkanal 14 ist ein Saugkanal 16 zugeordnet, welcher die jeweilige Absaugöffnung 14 mit einem nicht dargestellten Absaugsystem verbindet. Ein in den Fig. oberer Bereich des inneren Volumens des Mantels 10 ist in axialer Richtung durch Trennelemente 18 abgetrennt, so dass in diesem oberen Bereich eine axiale Führung einer in dem Mantel 10 stabilisierten Drallströmung realisiert ist. Die Trennelemente 18 sind dabei benachbart zu den Absaugöffnungen 14 angeordnet. An axialen Enden des Mantels 10 ist dieser von Seitenwänden 20 abgeschlossen. Die Saugkanäle sind im Querschnitt rund ausgebildet und radial zum Mantel 10 ausgerichtet. Die tangentiale Anordnung der Absaugöffnung zur Drallströmung ist bevorzugterweise auch dadurch zu erreichen, dass der Saugkanal 16 auch einen kleinen Anteil durch die Mantelfläche in den die Drallströmung umschließenden Mantel verlängert ist, wobei dieser Anteil nicht bis zur Mittelachse des Mantels bzw. bis in die Mitte der Drallströmung reichen darf. Wie sich insbesondere aus Fig. 2 ergibt bildet eine freie Kante der Trennelemente 18 eine Verlängerung einer Seite des Zuströmkanals 12.

Über den im Mantel 10 eine Zuströmöffnung ausbildenden Zuströmkanal 12 strömt ein Umgebungsfluid, wie beispielsweise mit Schadstoffen beladenen Luft, in das innere Volumen des Mantels 10 zu und erzeugt die Drallströmung, welche im wesentlichen einer Mantelfläche des Mantels 10 folgt. Über die Absaugöffnungen 14 und die Saugkanäle 16 wird aus dieser Drallströmung tangential am äußersten tangentialen Rand der Drallströmung, nämlich an der Mantelfläche, Fluid abgenommen und beispielsweise einem Reinigungs-. bzw. Filterprozess in dem Absaugsystem zugeführt oder einfach nur vom Ort der erfindungsgemäßen Vorrichtung 100 abtransportiert. Dadurch, dass die Absaugung tangential erfolgt werden bevorzugt schwerere Schwebeteilchen abgezogen, welche in der Drallströmung wegen auftretender Zentrifugal- bzw. Zentripedalkräfte nach außen in Richtung Mantelfläche strömen bzw. gedrückt werden.

Es hat sich dabei in überraschender und nicht vorhersehbarer Weise herausgestellt, dass auch mittels der tangentialen Absaugöffnungen innerhalb des Mantels 10 eine Drallströmung stabilisierbar ist.

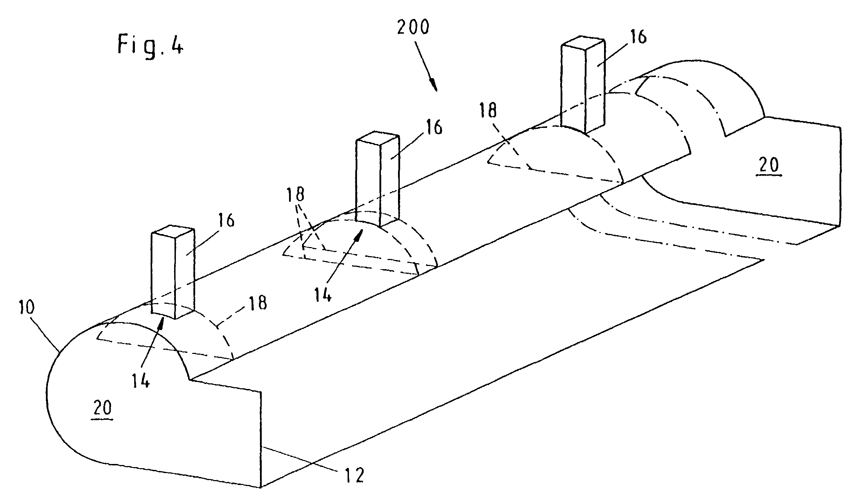

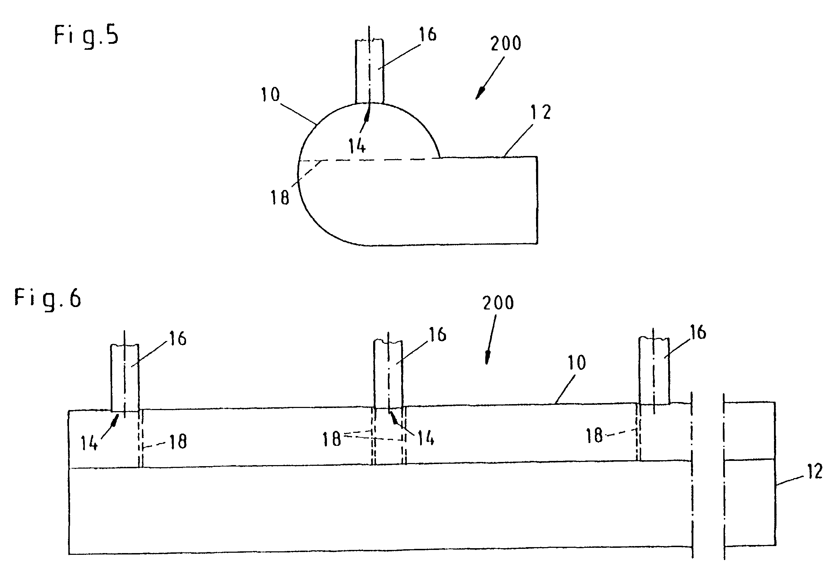

Die zweite bevorzugte Ausführungsform einer erfindungsgemäßen Vorrichtung 200 gemäß Fig. 4 bis 6 entspricht im wesentlichen, mit gleichen Bezugszeichen gekennzeichneten Teilen der ersten Ausführungsform 100, so dass auf die obige Beschreibung der Fig. 1 bis 3 Bezug genommen wird. Im Unterschied zur ersten bevorzugte Ausführungsform 100 weist die zweite bevorzugte Ausführungsform 200 im Querschnitt rechtwinklige Saugkanäle 16 auf.

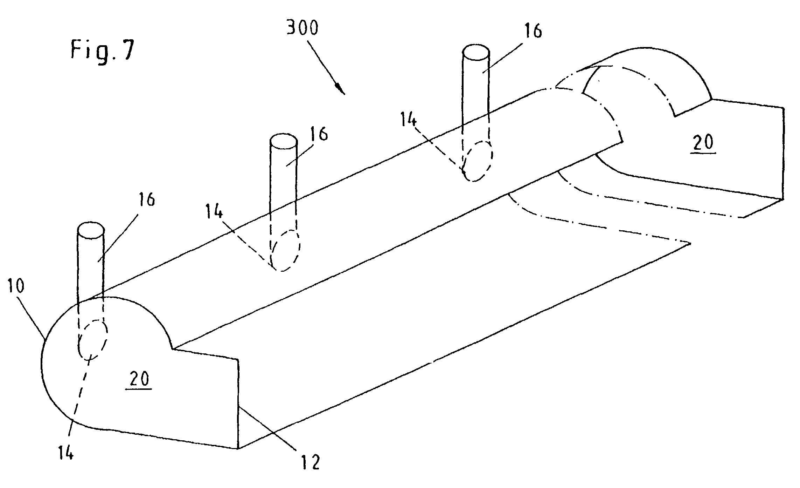

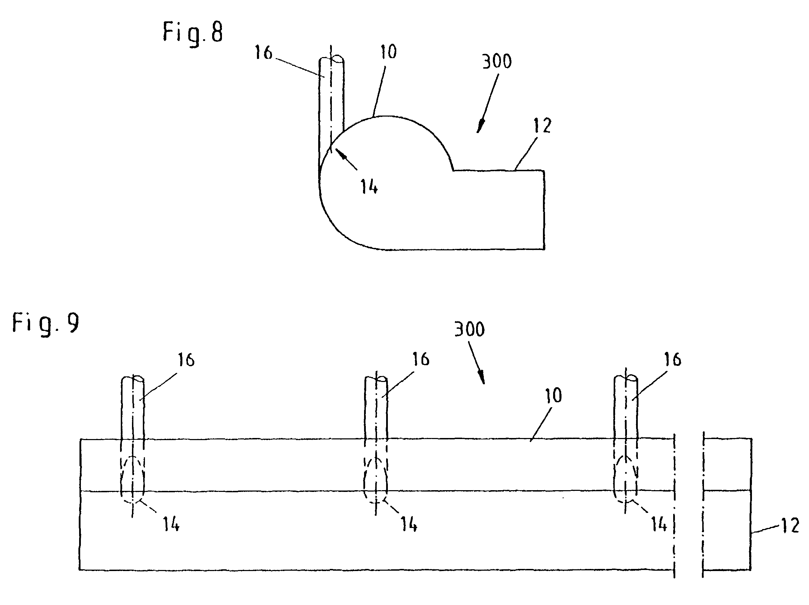

Die dritte bevorzugte Ausführungsform einer erfindungsgemäßen Vorrichtung 300 gemäß Fig. 7 bis 9 entspricht im wesentlichen, mit gleichen Bezugszeichen gekennzeichneten Teilen der ersten Ausführungsform 100, so dass auf die obige Beschreibung der Fig. 1 bis 3 Bezug genommen wird. Im Unterschied zur ersten und zweiten bevorzugte Ausführungsform 100 bzw. 200 weist die dritte bevorzugte Ausführungsform 300 tangential zum Mantel 10 bzw. zur Drallströmung ausgerichtete Saugkanäle 16 auf und die Absaugöffnungen 14 sind im Mantel 10 gegenüber dem Zuströmkanal 12 angeordnet.

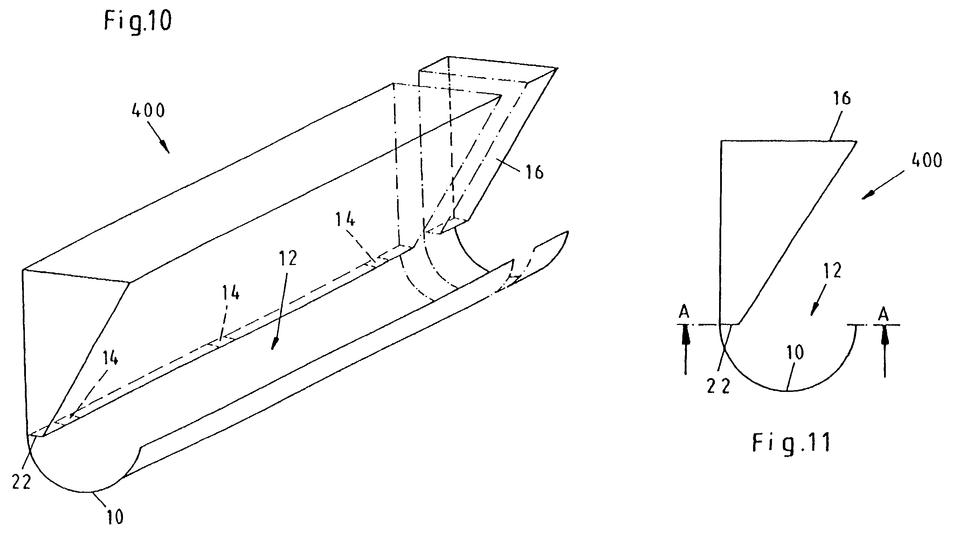

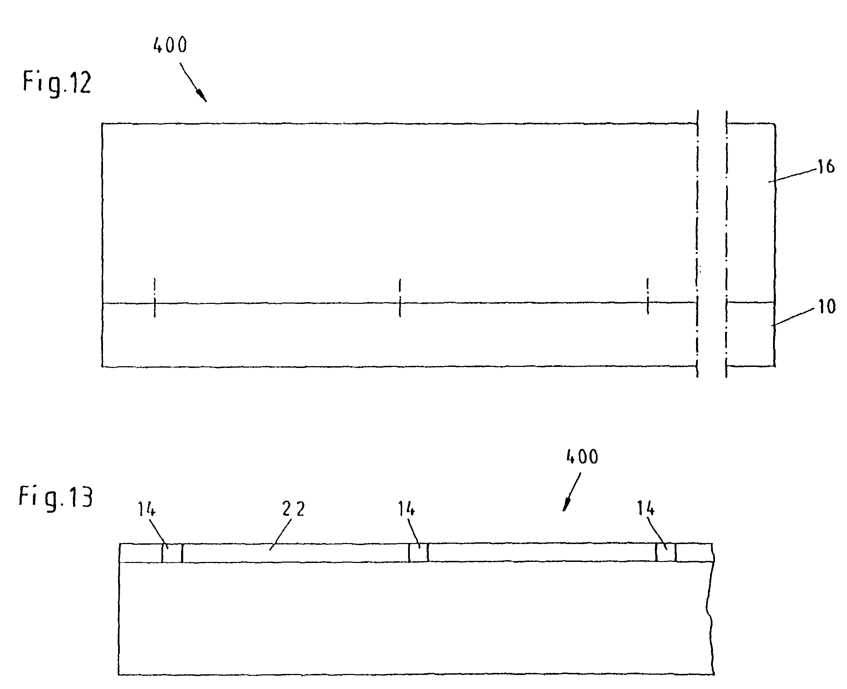

Die in Fig. 10 bis 13 dargestellte vierte bevorzugte Ausführungsform einer erfindungsgemäßen Vorrichtung 400 zum Absaugen von Fluiden umfasst einen als zylindrische Halbschale ausgebildeten Mantel 10, an dessen einem Ende eine Einziehung 22 jeweilige Absaugöffnungen 14 ausbildet ist. Über die gesamte axiale Länge des Mantels 10 ist ein einziger Saugkanal 16 angeordnet, welcher alle Absaugöffnungen 14 überdeckt. Der Saugkanal 16 erweitert sich im Querschnitt von den Absaugöffnungen 16 weg trichterförmig.

### BEZUGSZEICHENLISTE

- 100,200,300,400: Vorrichtung zum Erfassen und Absaugen von Fluiden
- 10: Mantel
- 12: Zuströmkanal
- 14: Absaugöffnungen
- 16: Saugkanal
- 18: Trennelemente
- 20: Seitenwänden
- 22: Einziehung

## Patentansprüche

1. Vorrichtung (100, 200, 300, 400) zum Erfassen und Absaugen von Fluiden, insbesondere Luft und/oder anderen Gasen, mit einem eine stabilisierte Drallströmung wenigstens teilweise umschließenden und diese Drallströmung führenden teilzylindrischen Mantel (10), welcher eine sich in axialer Richtung bezüglich des Mantels (10) erstreckende Zuströmöffnung (12) aufweist, und mit mehreren Absaugöffnungen (14), welche mit einem Absaugsystem verbunden sind, wobei jede Absaugöffnung (14) über einen Saugkanal (16) mit dem Absaugsystem verbunden ist,
**dadurch gekennzeichnet, dass** alle Absaugöffnungen (14) im teilzylindrischen Teil des Mantels (10) angeordnet sind.

2. Vorrichtung (100, 200, 300) nach Anspruch 1,
wobei
der bzw. die Saugkanäle (16) derart ausgebildet sind, dass deren Längsachse tangential und/oder radial bezüglich des Mantels (10) ausgerichtet ist.

3. Vorrichtung (100, 200, 300) nach einem der vorhergehenden Ansprüche,
wobei
die Saugkanäle (16) im Querschnitt rund, viereckig, oder rechteckig, ausgebildet sind.

4. Vorrichtung (100, 200, 300) nach einem der vorhergehenden Ansprüche,
wobei
in der Verlängerung jedes Saugkanals wenigstens ein Trennelement (18) parallel zur Drallströmung derart angeordnet ist, dass eine axiale Teilung des Volumens innerhalb des Mantels (10) über eine vorbestimmte Querschnittsfläche ausgebildet ist, welche kleiner als die gesamte Querschnittsfläche des Mantels (10) ist.

5. Vorrichtung (100, 200, 300) nach Anspruch 4,
wobei
die vorbestimmte Querschnittsfläche kleiner als die halbe Querschnittsfläche des Mantels (10) ist.

6. Vorrichtung (100, 200, 300) nach Anspruch 4 oder 5,
wobei
die Trennelemente (18) derart angeordnet sind, dass eine freie Seite derselben eine Verlängerung einer Wandung der Zuströmöffnung (12) in das Volumen innerhalb des Mantels (10) hinein bildet.

7. Vorrichtung (400) nach einem der vorhergehenden Ansprüche,
wobei
ein einziger Saugkanal (16) über die gesamte axiale Länge des Mantels (10) und alle Absaugöffnungen (14) überdeckend ausgebildet ist.

8. Vorrichtung (400) nach Anspruch 7,
wobei
sich der Saugkanal (16) im Querschnitt von den Absaugöffnungen (14) weg trichterförmig erweitert.

9. Vorrichtung (400) nach Anspruch 7 oder 8,
wobei
der Mantel (10) halbschalenförmig ausgebildet ist.

10. Vorrichtung (100, 200, 300, 400) nach einem der vorhergehenden Ansprüche,
wobei
der Mantel (10) an seinen axialen Enden mit Seitenwandungen (20) abgeschlossen ist.

## Claims

1. A device (100, 200, 300, 400) for collecting and sucking off fluids, in particular air and/or other gases, comprising a casing (10) in the shape of a partial cylinder, which casing (10) at least partly surrounds a stabilised spin or swirl flow and which casing (10) guides said spin or swirl flow; wherein said casing (10) comprises an inflow aperture (12) which extends in axial direction relative to the casing (10), and comprises several exhaust apertures (14) which are connected to an exhaust system, wherein each exhaust aperture (14) is connected to the exhaust system by way of a suction channel (16), **characterised in that** all the exhaust apertures (14) are arranged **in that** part of the casing (10) which is designed in the shape of a partial cylinder.

2. The device (100, 200, 300) according to claim 1, wherein the suction channel (16) or suction channels (16) is/are designed such that its longitudinal axis/their longitudinal axes is/are aligned tangentially and/or radially in relation to the casing (10).

3. The device (100, 200, 300) according to one of the preceding claims, wherein the suction channels (16) are round, polygonal, or rectangular in cross-section.

4. The device (100, 200, 300) according to any one of the preceding claims, wherein in the extension of each exhaust channel at least one separating element (18) is arranged parallel in relation to the spin or swirl flow, such that an axial division of the volume within the casing (10) occurs across a predefined cross-sectional area which is smaller than the total cross-sectional area of the casing (10).

5. The device (100, 200, 300) according to claim 4, wherein the specified cross-sectional area is smaller than half the cross-sectional area of the casing (10).

6. The device (100, 200, 300) according to claim 4 or 5, wherein the separating elements (18) are arranged such that a free side thereof forms an extension of a wall of the inflow aperture (12) into the volume within the casing (10).

7. The device (400) according to any one of the preceding claims, wherein a single suction channel (16) extends along the entire axial length of the casing (10) so as to cover all the suction apertures (14).

8. The device (400) according to claim 7, wherein the cross-section of the suction channel (16) is enlarged in a funnel-shaped manner away from the exhaust apertures (14).

9. The device (400) according to claim 7 or 8, wherein the casing (10) is shell-shaped.

10. The device (100, 200, 300, 400) according to any one of the preceding claims, wherein the axial ends of the casing (10) are finished off by lateral walls (20).

## Revendications

1. Dispositif (100, 200, 300, 400) pour le captage et l'aspiration de fluides, en particulier d'air et/ou d'autres gaz, comprenant une enveloppe ou manteau (10), sous forme de partie de cylindre entourant un écoulement rotatif stabilisé et guidant cet écoulement rotatif, ladite enveloppe présentant une ouverture d'admission (12) s'étendant dans la direction axiale relative à enveloppe, et comprenant plusieurs ouvertures d'aspiration (14), qui sont reliées à un système d'aspiration, chaque ouverture d'aspiration (14) étant reliée par l'intermédiaire d'un canal d'aspiration (16) au système d'aspiration, **caractérisé en ce que** toutes les ouvertures d'aspiration (14) sont disposées dans la partie cylindrique de l'enveloppe (10).

2. Dispositif (100, 200, 300) selon la revendication 1, **caractérisé en ce que** les canaux d'aspiration (16) sont configurés de telle sorte que leur axe longitudinal est dirigé tangentiellement et/ou radialement par rapport à l'enveloppe (10).

3. Dispositif (100, 200, 300) selon la revendication 1 ou 2, **caractérisé en ce que** les canaux d'aspiration (16) ont, en coupe transversale, une configuration circulaire, quadrangulaire ou rectangulaire.

4. Dispositif (100, 200, 300) selon l'une des revendications précédentes, **caractérisé en ce que** dans le prolongement de chaque canal d'aspiration, au moins un élément de séparation (18) est disposé parallèlement à l'écoulement rotatif, de telle sorte qu'une partition axiale du volume à l'intérieur de l'enveloppe (10) est ménagée par le biais d'une surface transversale prédéterminée, qui est plus petite que la surface totale transversale de l'enveloppe (10).

5. Dispositif (100, 200, 300) selon la revendication 4, **caractérisé en ce que** la surface transversale prédéterminée est plus petite que la moitié de la surface transversale de l'enveloppe (10).

6. Dispositif (100, 200, 300) selon la revendication 4 ou 5, **caractérisé en ce que** les éléments de séparation (18) sont disposés de telle sorte qu'une de leurs faces libres constitue un prolongement de la paroi de l'ouverture d'admission (12) dans le volume situé à l'intérieur de l'enveloppe (10).

7. Dispositif (400) selon l'une des revendications précédentes, **caractérisé en ce que** un canal unique d'évacuation (16) est ménagé sur la totalité de la longueur axiale de l'enveloppe (10) et recouvre toutes les ouvertures d'aspiration (14).

8. Dispositif (400) selon la revendication 7, **caractérisé en ce que** le canal d'aspiration (16) s'élargit, en coupe transversale, en forme d'entonnoir à partir des ouvertures d'aspiration (14).

9. Dispositif (400) selon la revendication 7 ou 8, **caractérisé en ce que** l'enveloppe (10) présente une configuration en forme de demie-coquille.

10. Dispositif (100, 200, 300, 400) selon l'une des revendications précédentes, **caractérisé en ce que** l'enveloppe (10) est raccordée à ses extrémités axiales par des parois latérales (20).
